# DEMANDE DE BREVET EUROPEEN

(11) **EP 1 494 145 A1**
(43) Date de publication de la demande: **05.01.2005**
(21) Numéro de dépôt: 04291620.5
(22) Date de dépôt: 28.06.2004
(51) Int. Cl.: G06F 17/30

(54) **Procédé de structuration graphique d'informations accessibles par l'intermédiaire d'un réseau de télécommunications, et d'extraction de ces informations**

(30) Priorité: 01.07.2003 FR 0307963
(71) Demandeur: FRANCE TELECOM, 75015 Paris (FR)
(72) Inventeur: Grattard, Gilles, 38610 Gieres (FR); Ortholand, Jean-Michel, 38760 Saint-Paul-de-Varces (FR)
(74) Mandataire: Loisel, Bertrand

(57) **Abrégé**

Une page disponible sur un site Web (14) est analysée pour y repérer une ou plusieurs zones de présentation de données, et pour construire une page enrichie dans laquelle chaque zone de présentation repérée est associée à un identifiant de zone, à des éléments graphiques de sélection et à un formulaire. La page enrichie est transmise et affichée sur un terminal d'utilisateur (12). En réponse à la sélection par l'utilisateur d'une zone repérée de la page, le formulaire associé à la zone sélectionnée lui est présenté pour qu'il entre des données de classification en relation avec la zone sélectionnée. La correspondance entre les données de classification entrées par l'utilisateur en relation avec chaque zone sélectionnée et l'identifiant de cette zone est enregistrée. Cet enregistrement est ultérieurement utilisé pour extraire de la page les informations spécifiées et les réutiliser pour diverses applications.

## Description

La présente invention concerne les techniques d'accès à des informations par l'intermédiaire de réseaux, et particulièrement à des informations mises à disposition sur des sites Web.

Le Web est un système bien connu par lequel des sites mettent à disposition d'utilisateurs des informations accessibles via Internet ou un Intranet. Souvent, ces informations hébergées par les sites sont organisées en pages écrites dans un langage de description approprié tel que HTML ("Hypertext Markup Language"). Elles peuvent être consultées par les utilisateurs au moyen de logiciels appelés navigateurs mettant en oeuvre des protocoles de transfert appropriés tels que HTTP ("Hypertext Transfer Protocol") ainsi que divers types d'interface homme-machine (IHM) pour la présentation aux utilisateurs.

Les outils du Web sont bien connus et sont notamment décrits dans les documents normatifs de l'IETF ("Internet Engineering Task Force") et du W3C ("World Wide Web Consortium").

Une page HTML comporte des données délimitées par des marqueurs ("tags"). Les marqueurs se rapportent à des commandes pour la présentation des informations de la page: par exemple le marqueur <P> indique un nouveau paragraphe, le marqueur <B> indique que le texte qui suit (jusqu'au marqueur de fin </B>) est à afficher en caractères gras, etc. D'autres marqueurs se rapportent à des commandes liées à des actions à exécuter par le navigateur: par exemple le marqueur <A HREF="url"> représente un lien indiquant que le texte qui suit (jusqu'au marqueur de fin </A>) est à afficher comme une zone de commande qui, en réponse à une action de l'utilisateur (souvent un clic de souris), provoque le chargement d'une autre page stockée à l'adresse url écrite au format des URL ("Uniform Resource Locator", par exemple http://www.francetelecom.com/).

Les données délimitées par les marqueurs représentent de l'information sémantique à délivrer à l'utilisateur. Ces données sont présentées avec des attributs graphiques contrôlés par les marqueurs, plus ou moins sophistiqués selon les capacités du navigateur et de la plate-forme où il s'exécute.

Les sites Web stockent de plus en plus d'informations qui ne sont disponibles que par Internet, ou pour lesquelles Internet est le mode d'accès le plus commode. Or il est souvent nécessaire de réutiliser de telles informations de façon séparée de la page HTML d'où elles proviennent. Cela peut servir à les afficher sur d'autres médias ou à les inclure sous d'autres formes dans d'autres pages HTML. Cela peut aussi servir à déclencher des actions particulières en réponse au changement de certaines informations spécifiées. Une telle réutilisation implique de séparer les données elles-mêmes des éléments de présentation du langage HTML.

L'extraction du contenu d'une page peut être effectuée en ajoutant des marqueurs particuliers pour délimiter les zones où les données sont à extraire. L'intervention d'une personne au moment de la création des pages est alors nécessaire, ce qui requiert d'une part d'avoir des connaissances en matière de développement logiciel (langage HTML), et d'autre part d'avoir accès aux pages pour pouvoir les modifier. Ces deux conditions ne sont généralement pas remplies par l'internaute moyen.

Un mécanisme d'extraction sans intervention sur les pages HTML est possible. C'est ce que proposent quelques produits proposés par des éditeurs de logiciels:
- la société Wokup SA fournit une application de multi-publication avec un module d'extraction. Mais celui-ci n'est pas graphique, ce qui le rend peu exploitable par un utilisateur moyen. En outre, ce module fait partie intégrante de l'environnement de développement, et nécessite donc une configuration importante de l'application de sorte qu'il ne peut pas être séparé de toutes les autres fonctionnalités. De plus, il requiert un niveau de compétences et une technicité élevés pour son utilisation.
- Webl, W4F sont des langages d'extraction qui n'offrent ni interface graphique ni environnement de développement. Leurs utilisations par des personnes non préalablement formées est précaire.

Un but de la présente invention est de proposer une technique qui permette à un utilisateur final tel qu'un internaute moyen de définir et rendre exploitables des informations disponibles sur des sites Web. Un autre but est de permettre l'extraction ultérieure de ces informations même si elles ont été modifiées, de manière par exemple à les dépouiller de leurs attributs de présentation en vue de les exploiter sur un autre média.

L'invention propose ainsi un procédé de structuration graphique d'informations accessibles sur un site par l'intermédiaire d'un réseau de télécommunications, comprenant les étapes suivantes:
- analyse d'une page disponible sur le site pour repérer au moins une zone de présentation de données dans ladite page, et pour construire une page enrichie dans laquelle chaque zone de présentation repérée est associée à un identifiant de zone, à des éléments graphiques de sélection et à un formulaire;
- affichage de la page enrichie sur un terminal d'utilisateur et, en réponse à la sélection par l'utilisateur d'une zone repérée de la page, présentation sur le terminal d'utilisateur du formulaire associé à la zone sélectionnée pour l'entrée de données de classification par l'utilisateur en relation avec la zone sélectionnée; et
- enregistrement pour l'utilisateur de paramètres représentant une correspondance entre les données de classification entrées par l'utilisateur en relation avec chaque zone sélectionnée et l'identifiant de ladite zone sélectionnée.

Ces dispositions permettent de réaliser la structuration des informations sélectionnées par une interface graphique commodément utilisable. L'utilisateur pourra notamment procéder par simples clics, sans programmation.

Un autre aspect de la présente invention se rapporte à un procédé d'extraction d'informations d'une page accessible sur un site par l'intermédiaire d'un réseau de télécommunications, à l'aide de paramètres enregistrés pour un utilisateur en exécutant le procédé de structuration graphique ci-dessus. Dans ce procédé d'extraction, on accède à la page sur le site, on l'analyse en organisant les informations apparaissant dans les zones sélectionnées par l'utilisateur conformément aux données de classification entrées par l'utilisateur en relation avec lesdites zones, et on construit un document contenant les informations ainsi organisées.

Les données extraites sont alors réutilisables sous une forme adaptée aux besoins personnalisés de l'utilisateur. L'extraction peut être opérée automatiquement ou en réponse à une requête de l'utilisateur.

Les procédés de structuration graphique et d'extraction d'informations seront généralement exécutés sous le contrôle d'un programme installé dans un ordinateur raccordé au réseau de télécommunications. Cet ordinateur peut être un terminal à disposition de l'utilisateur. Dans un mode de réalisation plus particulièrement envisagé, les procédés sont exécutés dans le cadre d'un service en ligne, accessible par exemple sur un site Web.

Un autre aspect de la présente invention se rapporte ainsi à un serveur comprenant:
- des moyens d'analyse d'une page disponible sur un site par l'intermédiaire d'un réseau de télécommunications, pour repérer au moins une zone de présentation de données dans ladite page, et pour construire une page enrichie dans laquelle chaque zone de présentation repérée est associée à un identifiant de zone, à des éléments graphiques de sélection et à un formulaire;
- des moyens de transmission de la page enrichie à un terminal d'utilisateur et de récupération de données de classification entrées par l'utilisateur en relation avec au moins une zone sélectionnée parmi les zones de présentation repérées dans la page enrichie; et
- des moyens d'enregistrement pour l'utilisateur de paramètres représentant une correspondance entre les données de classification entrées par l'utilisateur en relation avec chaque zone sélectionnée et l'identifiant de ladite zone sélectionnée.

Lorsque ce serveur assure en outre l'extraction ultérieure des informations, il comprend des moyens pour accéder à la page sur le site après enregistrement des paramètres pour l'utilisateur, des moyens d'analyse de la page en organisant les informations apparaissant dans les zones sélectionnées par l'utilisateur conformément aux données de classification entrées par l'utilisateur en relation avec lesdites zones, et des moyens de construction d'un document contenant les informations ainsi organisées.

D'autres particularités et avantages de la présente invention apparaîtront dans la description ci-après d'exemples de réalisation non limitatifs, en référence aux dessins annexés, dans lesquels :
- la figure 1 est un schéma synoptique illustrant une réalisation du procédé de structuration graphique selon l'invention; et
- la figure 2 est un schéma synoptique illustrant une réalisation du procédé d'extraction d'informations selon l'invention.

L'invention est décrite ci-après dans son application à un service intégré de structuration graphique de données présentes sur une page Web et d'extraction dynamique des données présentes sur la page Web.

La structuration graphique est une procédure offrant les fonctionnalités suivantes:
- délimitation graphique des zones d'une page HTML donnée;
- sélection graphique par un utilisateur d'une ou plusieurs zones d'où les données seront extraites pour une utilisation sur un autre média;
- fourniture par l'utilisateur de données de classification par l'utilisateur en relation avec une ou plusieurs zones sélectionnées graphiquement, notamment sélection du type auquel se rattachent ces informations;
- analyse de la récurrence des informations, afin de reconnaître des zones correspondant à un même type; et
- enregistrement des données de classification en correspondance avec les zones concernées.

L'extraction des données, effectuée sur la base de la structuration réalisée préalablement, inclut les fonctionnalités suivantes:
- analyse par un processus de la récurrence des informations, afin d'extraire toutes les occurrences de données d'un même type,
- extraction de ces différentes occurrences d'informations présentes sur une page, et fourniture de ces informations sous forme structurée selon le typage précédemment réalisé.

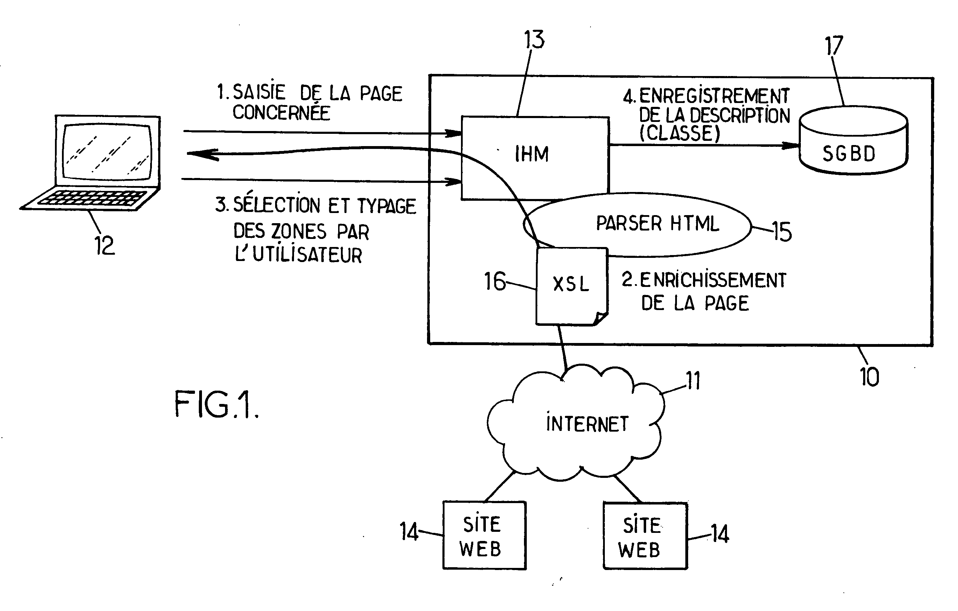

La figure 1 montre un serveur 10 pour la mise en oeuvre du service de structuration graphique. Dans la réalisation considérée, c'est un serveur Web relié à l'Internet 11. Des terminaux d'utilisateurs 12 communiquent avec ce serveur 10, notamment à travers le réseau Internet 11. Ces terminaux, pouvant être de nature diverse, incluent un logiciel de navigation pour accéder à l'interface homme-machine (IHM) 13 du serveur Web.

L'interface homme-machine 13 inclut typiquement une page d'accueil du service au format HTML, présentant des champs pour que l'utilisateur s'identifie et introduise une adresse de la page Web accessible sur un site 14 d'où il souhaiterait pouvoir extraire des informations. Cette adresse peut être fournie sous forme d'URL ("Uniform Resource Locator").

Le serveur 10 consulte la page Web ayant l'adresse indiquée, qu'il récupère de façon classique par une requête HTTP, et il l'analyse pour l'enrichir d'éléments graphiques de sélection de zones. Cette analyse de la page HTML ("parsing") est effectuée par le module 15 de la figure 1 (paser HTML) à l'aide d'une feuille de style 16 établie selon le langage XSL ("XML Stylesheet Language").

Les langages XSL et XML ("eXtended Markup Language") sont bien connus de l'homme du métier. Les feuilles de style XSL se composent de règles permettant de sélectionner des éléments d'un document XML ou HTML et de leur appliquer des attributs de formatage. Dans le cas présent, la feuille de style 16 contrôle le module de parsing HTML 15 pour qu'il repère les zones de présentation de données dans la page indiquée par l'utilisateur et associe à chacune de ses zones:
- un identifiant unique de zone;
- des éléments graphiques supplémentaires, tels que par exemple une couleur spécifique de fond et/ou de caractères, permettant à l'utilisateur de visualiser qu'il s'agit d'une zone sélectionnable lorsque la page est affichée;
- un formulaire destiné à recevoir les données de classification de l'utilisateur, notamment le type de zone. Le typage peut être proposé via une liste de choix incluse dans le formulaire, ou laissé complètement libre à l'utilisateur.

Une fois que l'analyse de la page est achevée, le serveur 10 transmet la page enrichie au terminal 12 de l'utilisateur pour affichage.

L'utilisateur est invité à sélectionner successivement, par exemple à la souris, les zones qui l'intéressent. La sélection d'une zone provoque l'affichage du formulaire transmis dans la page enrichie (ce formulaire ne s'affiche que sur sélection de la zone correspondante). A l'aide de ce formulaire, l'utilisateur saisit, ou choisit dans une liste, les données de classification pertinentes, qui peuvent se limiter au type de zone, puis valide son choix.

Suite au typage d'une zone, les zones "équivalentes" de la page, c'est-à-dire celles qui contiennent d'autres occurrences d'un même type d'information (par exemple plusieurs occurrences d'un titre dans une liste d'articles) sont repérées automatiquement sur la base de similitudes de structuration HTML (par exemple marqueurs identiques). Si l'utilisateur sélectionne l'une de ces zones équivalentes, il peut constater dans le formulaire qui s'affiche que ces zones ont été typées de la même façon.

Un bouton de soumission est inclus dans la page enrichie pour que l'utilisateur le clique une fois qu'il a terminé de sélectionner les zones qui l'intéressent et de fournir les données de classification s'y rapportant. L'activation de ce bouton provoque l'envoi au serveur 10 des formulaires remplis pour les zones qui ont été sélectionnées (étape 3 sur la figure 1). Le serveur 10 enregistre alors, dans une base de données 17 dont il dispose, une description des données de classification fournies par l'utilisateur et les identifiants des zones de présentation correspondantes (étape 4). L'URL de la page d'origine est également conservée dans la base de données 17. La conservation de ces données est naturellement effectuée en relation avec l'identifiant de l'utilisateur.

Dans une réalisation préférée, le serveur enregistre de manière persistante l'association page/identifiant de zone/typage une seule fois pour un ensemble de zones équivalentes. L'identifiant de zone enregistré permet alors de repérer n'importe quel élément d'un ensemble de zones équivalentes. Ce typage revient à stocker de façon persistante la description de zones équivalentes, se trouvant sur une page Web. En d'autres termes, on enregistre une classe d'objets, et les données contenues dans les zones sont alors des instanciations de cette classe.

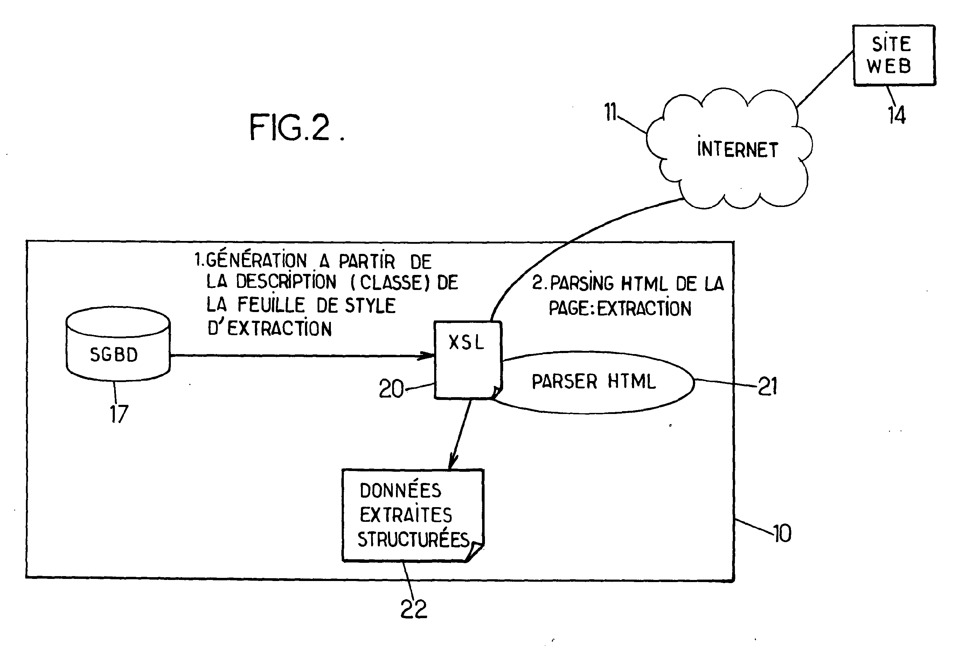

La figure 2 montre un ordinateur 10 mettant en oeuvre le service d'extraction d'informations conformément à la structuration graphique ainsi opérée. Dans la réalisation considérée, cet ordinateur est confondu avec le serveur Web précité 10. Mais il pourrait aussi être une machine distincte, ayant accès en lecture à la base de données 17.

Le service d'extraction permet, à partir de la description de zone (ou de classe) préalablement enregistrée, d'extraire les données (objets) de la page concernée, lesquelles données ont pu avoir été mises à jour en termes de contenu. Un mode d'implémentation peut être le suivant:
- à partir de la description enregistrée pour l'utilisateur, une feuille de style XSL 20 est générée (en variante, cette feuille de style aurait pu avoir été déterminée initialement dans la phase de structuration, enregistrée dans la base 17 et simplement récupérée pour procéder à l'extraction);
- à l'aide d'un module de parsing HTML 21, la feuille de style 20 est appliquée à la page HTML concernée, téléchargée de nouveau depuis le site Web 14, afin d'extraire les informations qui se trouvent actuellement dans les zones qui ont été sélectionnées par l'utilisateur;
- le résultat du parsing est un flot structuré des données extraites, formant un document 22 avantageusement construit en langage XML.

Ce document 22 contient typiquement les données extraites en relation avec les types de zones et leurs identifiants. Les données issues de zones équivalentes peuvent être marquées comme telles.

La constitution en XML du document 22 permettra de l'exploiter sur divers types de media à l'aide de processeurs XSLT effectuant des opérations de parsing appropriées. A titre d'exemple, le document pourra servir ou contribuer à construire une autre page HTML ou XML pour présenter à l'utilisateur des informations personnalisées; les données qu'il contient pourront faire l'objet d'une analyse pour déclencher diverses actions comme par exemple des alarmes, des notifications à l'utilisateur; etc.

Selon les besoins de ces différentes applications, l'extraction des informations spécifiées (accès à la page sur le site 14, analyse de la page et construction du document XML 22) est effectuée soit en réponse à une requête de l'utilisateur, soit automatiquement. En mode automatique, l'extraction peut notamment être effectuée périodiquement, avec une périodicité spécifiée par l'utilisateur dans la phase de configuration.

Dans la description qui précède, les programmes assurant les services de structuration graphique et d'extraction sont hébergés par un serveur 10 relié au réseau 11. On notera toutefois que ces programmes peuvent aussi résider localement dans l'ordinateur 12 de l'utilisateur.

## Revendications

1. Procédé de structuration graphique d'informations accessibles sur un site (14) par l'intermédiaire d'un réseau de télécommunications (11), comprenant les étapes suivantes:
- analyse d'une page disponible sur le site pour repérer au moins une zone de présentation de données dans ladite page, et pour construire une page enrichie dans laquelle chaque zone de présentation repérée est associée à un identifiant de zone, à des éléments graphiques de sélection et à un formulaire;
- affichage de la page enrichie sur un terminal d'utilisateur (12) et, en réponse à la sélection par l'utilisateur d'une zone repérée de la page, présentation sur le terminal d'utilisateur du formulaire associé à la zone sélectionnée pour l'entrée de données de classification par l'utilisateur en relation avec la zone sélectionnée; et
- enregistrement pour l'utilisateur de paramètres représentant une correspondance entre les données de classification entrées par l'utilisateur en relation avec chaque zone sélectionnée et l'identifiant de ladite zone sélectionnée.

2. Procédé selon la revendication 1, dans lequel les données de classification entrées par l'utilisateur en relation avec une zone sélectionnée comprennent un type de zone.

3. Procédé selon la revendication 2, dans lequel on détecte automatiquement des zones équivalentes à partir de similitudes de structuration HTML, et on alloue le même type de zone aux zones détectées comme équivalentes.

4. Procédé selon l'une quelconque des revendications précédentes, dans lequel la page enrichie est une page HTML construite en appliquant une feuille de style XSL (16) à la page disponible sur le site.

5. Procédé selon l'une quelconque des revendications précédentes, dans lequel on génère, à partir des paramètres enregistrés pour l'utilisateur, une feuille de style XSL (20) à appliquer ultérieurement à la page disponible sur le site pour extraire des informations dans les zones sélectionnées par l'utilisateur.

6. Procédé selon l'une quelconque des revendications précédentes, dans lequel l'étape d'analyse de la page et l'étape d'enregistrement de paramètres pour l'utilisateur sont exécutées dans un serveur (10) raccordé au réseau de télécommunications (11), qui transmet la page enrichie au terminal d'utilisateur (12) pour l'obtention des données de classification.

7. Procédé d'extraction d'informations d'une page accessible sur un site (14) par l'intermédiaire d'un réseau de télécommunications (11), à l'aide de paramètres enregistrés pour un utilisateur en exécutant un procédé de structuration graphique selon l'une quelconque des revendications précédentes, dans lequel on accède à la page sur le site, on l'analyse en organisant les informations apparaissant dans les zones sélectionnées par l'utilisateur conformément aux données de classification entrées par l'utilisateur en relation avec lesdites zones, et on construit un document (22) contenant les informations ainsi organisées.

8. Procédé selon la revendication 7, dans lequel on génère une feuille de style XSL (20) à partir des paramètres enregistrés pour l'utilisateur, et on applique cette feuille de style à ladite page pour l'analyse.

9. Procédé selon la revendication 7 ou 8, dans lequel le document généré (22) est structuré en langage XML.

10. Procédé selon l'une quelconque des revendications 7 à 9, dans lequel les étapes d'accès à la page sur le site (14), d'analyse de la page et de construction du document (22) sont exécutées en réponse à une requête de l'utilisateur.

11. Procédé selon l'une quelconque des revendications 7 à 9, dans lequel les étapes d'accès à la page sur le site (14), d'analyse de la page et de construction du document (22) sont exécutées périodiquement.

12. Serveur (10) comprenant:
- des moyens (15) d'analyse d'une page disponible sur un site (14) par l'intermédiaire d'un réseau de télécommunications (11), pour repérer au moins une zone de présentation de données dans ladite page, et pour construire une page enrichie dans laquelle chaque zone de présentation repérée est associée à un identifiant de zone, à des éléments graphiques de sélection et à un formulaire;
- des moyens (13) de transmission de la page enrichie à un terminal d'utilisateur (12) et de récupération de données de classification entrées par l'utilisateur en relation avec au moins une zone sélectionnée parmi les zones de présentation repérées dans la page enrichie; et
- des moyens (17) d'enregistrement pour l'utilisateur de paramètres représentant une correspondance entre les données de classification entrées par l'utilisateur en relation avec chaque zone sélectionnée et l'identifiant de ladite zone sélectionnée.

13. Serveur selon la revendication 12, dans lequel les données de classification entrées par l'utilisateur en relation avec une zone sélectionnée comprennent un type de zone.

14. Serveur selon la revendication 13, comprenant des moyens pour détecter automatiquement des zones équivalentes à partir de similitudes de structuration HTML, et des moyens pour allouer le même type de zone aux zones détectées comme équivalentes.

15. Serveur selon l'une quelconque des revendications 12 à 14, comprenant des moyens pour accéder à la page sur le site après enregistrement des paramètres pour l'utilisateur, des moyens (21) d'analyse de la page en organisant les informations apparaissant dans les zones sélectionnées par l'utilisateur conformément aux données de classification entrées par l'utilisateur en relation avec lesdites zones, et des moyens de construction d'un document (22) contenant les informations ainsi organisées.

16. Serveur selon la revendication 15, dans lequel les moyens d'accès à la page sur le site, d'analyse de la page et de construction du document sont activés en réponse à une requête de l'utilisateur.

17. Serveur selon la revendication 15, dans lequel les moyens d'accès à la page sur le site, d'analyse de la page et de construction du document sont activés périodiquement.

18. Programme d'ordinateur à installer dans un ordinateur (10) raccordable à un réseau de télécommunications (11), comprenant des instructions pour mettre en oeuvre un procédé selon l'une quelconque des revendications 1 à 11 lors d'une exécution du programme par des moyens de traitement dudit ordinateur.
